# EUROPEAN PATENT SPECIFICATION

(11) **EP 3 866 996 B1**
(45) Date of publication and mention of the grant of the patent: **31.08.2022**
(21) Application number: 19805425.6
(22) Date of filing: 17.10.2019
(51) Int. Cl.: B21F 27/12, B25B 11/00

(54) **SYSTEM AND METHOD FOR ASSEMBLING A REBAR CAGE**
SYSTEM UND VERFAHREN ZUR HERSTELLUNG EINES BEWEHRUNGSKORBS
SYSTÈME ET PROCÉDÉ DE FORMAGE D'UNE CAGE D'ARMATURE

(30) Priority: 18.10.2018 US 201862747332 P
(43) Date of publication of application: 25.08.2021
(73) Proprietor: Toggle Industries, Bohemia NY 11716 (US)
(72) Inventor: BLANK, Daniel, New York, NY 10013 (US); COHEN, Ian, M., New York, NY 10003 (US); BHAVE, Tanaya, Brooklyn, NY 11201 (US); HELLMAN, Michael, NY 11766-1829 (US)
(74) Representative: Prinz & Partner mbB
(86) International application number: PCT/US2019/056751
(87) International publication number: WO 2020/081822

(56) References cited:
- WO-A1-2011/064349
- WO-A1-2011/075785
- DE-A1-102013 225 049
- DE-A1-102017 207 351
- US-A- 5 121 907
- US-B2- 6 837 017

## Description

The present invention is directed to a rebar cage assembly system comprising a modular jig and a method for assembling rebar cages. More particularly, the system and method of the present invention include partial and full automation with industrial robots.

Assembly of rebar cages for reinforced concrete application in the construction industry is not fully automated due to the physical problem of holding the workpiece as it is being assembled by industrial robots (material handling and connecting) and the process problem of automating the reconfiguration in setup for each job for a wide range of possible shapes and sizes, both of which typically require human intervention to effectuate. Specifically, assembly typically includes manual setup fixturing systems which, while reconfigurable, require human intervention to both set up the jig and fix initial workpiece components in place. Thus, no fully automated end-to-end solution has been known using only industrial robots.

Known solutions for assembly of rebar cages for reinforced concrete application in the construction industry are typically specialized purpose, non-configurable jigs which are limited-in-scope static systems. Tables are known which are designed to hold single pieces of rebar bars, primarily for use in rebar mats. These devices are not configurable for size or function. For example, existing systems fail to adequately provide for three-dimensional configuration and/or structures. Moreover, these tables utilize a compact, short, triangle shape structure to support a single bar. While multiple structures may be used for an intended application, the structures are not engineered to be part of an active system.

Jigs which are capable for reconfiguration or varied application by way of movable clamps and positioners, either manual or motor driven, are known. However, such jigs are generally for use with welding and assembling contoured workpieces. Additionally, tables utilizing evenly spaced slots capable of reconfiguring utilizing magnets are known, however, modularity of such systems is limited and is implemented for different technical applications as compared to rebar cage assembly. While modular tables are known, the modular elements are fixed in nature and highly specialized. In most instances, such systems are not designed for use in industrial robotic systems.

Known jigs for use with robotic systems are highly specialized in purpose and design and are limited to non-modular operation for assembly of articles such as mobile phones, motorcycle frames, and automobiles.

German Patent Application No. DE102017207351 ("Newly reconfigurable holder for welding") discloses a system for joining at least two components by welding includes a magnetic base for receiving the components for welding and a flexible magnetic element configured in accordance with a weld path defining a weld connecting the components. The flexible magnetic element exerts a retaining force on the components in response to a magnetic field generated by selectively activating the magnetic base. The system may include a magnetic fixing element which is disposed adjacent to a contour edge to be welded to a component to produce a repulsive magnetic force between the flexible magnetic element and the magnetic fixing element for locating the flexible magnetic element based on the contour edge and a clearance gap for a welding apparatus for accessing a continuous weld path defined by the contour edge, providing that the welding apparatus may form a continuous weld along the weld path.

U.S. Patent No. 6,837,017 ("Apparatus for placing rebar in continuously reinforced concrete paving") discloses a transverse bar assembly for use in constructing rebar mats for reinforcement of concrete paving includes a plurality of chairs and clips each having a lower portion that affixes to a transverse bar in the direction of its length and an upper portion for orthogonally receiving and holding locked in place a longitudinal bar, the chair also having a support extending to a base surface.

U.S. Patent No. 5,121,907 ("Rotatable reconfigurable table for holding and supporting contoured workpieces) discloses a reconfiguration table, for holding and supporting a contoured workpiece while work is performed thereon comprising a frame defining a perimeter and a plane; a plurality of support elements disposed in spaced array within the frame perimeter, each element having an end and being independently translatable in a direction substantially perpendicular to the plane, the ends of the elements cooperating to define a support surface for the workpiece; clamp members, supported by the frame, for selectively locking the elements in position to define the support surface; attaching members, supported by the frame independently of the support elements, for holding the workpiece on the support surface; and a gear reducer and motor for rotating the frame with the workpiece supported thereon about an axis parallel to the plane of the frame.

U.S. Patent No. 5,350,162 ("Apparatus for assembling reinforcing bar pier cages") discloses a jig for assembling a rebar pier cage wherein certain of the individual jig elements are laterally and longitudinally adjustable to provide a jig capable of assembling rebar pier cages of various sizes and shapes. The jig elements comprise a plurality of rebar stirrup retaining elements removably secured within longitudinal openings in first and second, elongated channel bars which traverse a rectangular work surface in parallel relationship. Opposite ends of the first and second channel bars are slidingly secured within longitudinal openings of third and fourth channel bars which laterally span the opposite, shorter edges of the work surface. Means are provided to adjust the longitudinal spacing between each stirrup retaining element in the first and second channel bars, and also the lateral spacing between the first and second channel bars. The work surface is pivotally connected to a table frame whereby the work surface may be moved between horizontal and vertical positions with respect to the table frame and floor.

WO 2011/075785 A1, forming the basis for the preamble of claim 1, describes an apparatus for making reinforcing cages, with a frame and support members, which are being held in place by the frame and a plurality of holding members that receive and hold reinforcing rods, wherein the holding members are retainable at various positions on the support member.

A partial or fully automated rebar cage assembly system with a modular jig and a method for forming a rebar cage that show one or more improvements in comparison to the prior art would be desirable in the art.

The present invention is directed to a rebar cage assembly system comprising a modular jig for forming a rebar cage. The modular jig includes a fixture base, and a plurality of jig subcomponents. The jig subcomponents each have a jig attachment feature and a rebar retention feature. The rebar retention feature is configured to detachably receive rebar segments, for example, magnetically, pneumatically or hydraulically. The plurality of jig subcomponents are customizably arrangeable on the fixture base to form a modular jig to cooperatively position rebar segments in the rebar retention features. The rebar cage assembly system further includes a robotic system having a first robot and second robot and a plurality of rebar segments. The first robot is arranged and disposed to independently retrieve and position jig subcomponent and rebar segments. The second robot is arranged and disposed to join rebar segments to form a rebar cage.

The present invention is also directed to a method for assembling a rebar cage. The method includes providing a robotic system having a first robot and second robot, and a plurality of jig subcomponents and rebar segments in a staging area. The jig subcomponents each have a jig attachment feature and a rebar retention feature. The rebar retention feature is configured to detachably receive the rebar segments. A fixture base is also provided. The first robot is arranged and disposed to independently retrieve and position jig subcomponents and rebar segments on the fixture base. The second robot is arranged and disposed to join rebar segments to form the rebar cage. The method further includes providing an assembly plan for a configuration of the modular jig to the robotic system. At least one of the jig subcomponents are directed to the fixture base with the first robot to detachably engage the jig subcomponent to the fixture base, to other jig subcomponents or both. The jig subcomponents are repeatedly directed to the fixture base with the first robot until the jig subcomponents engaged to the fixture base, to other jig subcomponents or to both form the configuration of the modular jig. At least one of the rebar segments is directed to the modular jig with the first robot and positioning the rebar segment to detachably engage the rebar retention feature of at least one jig subcomponent. The rebar segments to the modular jig are repeatedly directed with the first robot until the rebar segments are positioned in a configuration that, when joined, form a rebar cage. The rebar segments are joined together with the second robot to form a rebar cage.

Other features and advantages of the present invention will be apparent from the following more detailed description, taken in conjunction with the accompanying drawings which illustrate, by way of example, the principles of the invention.
FIG. 1 is a perspective view of a rebar cage assembly system, according to an embodiment of the present disclosure.
FIG. 2 is a perspective view of a rebar cage assembly system, according to an alternate embodiment of the present disclosure.
FIG. 3 is a perspective view of jig subcomponents, according to an embodiment of the present disclosure.
FIG. 4 is a perspective view modular jig system having adjustable fixture spacing, according to an embodiment of the present disclosure.
FIG. 5 is a perspective view of a rebar cage assembly system, according to an alternate embodiment of the present disclosure.
FIG. 6 is a process flow diagram of a method of forming a rebar cage.
FIG. 7 is a perspective view showing a robot directing a rebar segment to a jig subcomponent, according to an embodiment of the present disclosure.
FIG. 8 is a perspective view showing a robot directing a rebar segment to a jig subcomponent, according to an embodiment of the present disclosure.
FIG. 9 is a perspective view showing a robot directing a long rebar segment to a jig subcomponent, according to an embodiment of the present disclosure.
FIG. 10 is a perspective view showing an alternate embodiment of a jig subcomponent, according to an embodiment of the present disclosure.
FIG. 11 is a perspective view showing a robot joining rebar segments, according to an embodiment of the present disclosure.
FIG. 12 is a workflow diagram of a method for assembling rebar cages, according to an embodiment of the present disclosure.
FIG. 13 is a workflow diagram of a method for assembling rebar cages, according to an embodiment of the present disclosure.

Wherever possible, the same reference numbers will be used throughout the drawings to represent the same parts.

Provided are exemplary rebar cage assembly systems, modular jig systems and methods for assembling rebar cages. Embodiments of the present disclosure, in comparison to compositions of matter and methods not utilizing one or more features disclosed herein, include increased automation, increased efficiency, increased production speed, increased modularity, or combinations thereof. The modular jig system, according to the present disclosure, provides a cost savings by use of a single jig system for a broad range of assembled shapes and sizes that would otherwise require a variety of different fixtures or machines and the space to set them up. Likewise, the modular jig system, according to the present disclosure, reduces or eliminates the manual labor involved to prepare rebar cages into shapes/sizes that are not feasible in current state of the art systems. Further, the modular jig system, according to the present disclosure, provides time savings achieved via automation of the setup and breakdown process. Further, the modular jig system, according to the present disclosure, provides cost savings associated with easy replacement of broken, lost or worn out components due to the modular design and provides reduced downtime and work time due to modular fixturing having rebar retention features which creates instantaneous secure connections with rebar components versus a mechanical fixture requiring tightening or closure. Further still, the modular jig system, according to the present disclosure, provides both rebar retention features, such as magnetic, hydraulically actuated, pneumatically actuated, or electrically actuated brackets, as well as reconfigurable jig engagement features, such as tracks or mechanical features, to provide greater flexibility in rebar cage geometry.

Previous attempts at improved rebar cage construction utilize manually setup fixturing systems which while reconfigurable require human intervention to both setup the jig and fix initial work piece components in place. None of these solutions provide a process by which industrial robots may perform this segment of the workflow resulting in a more fully automated end to end solution. The modular design of the present invention solves the problem of manual setup by allowing for automated, robotic setup. An extensive selection of intercompatible component variants supporting different functions as well as bar configurations and spacing will allow for a wide range of possible cage assemblies.

The modular and reconfigurable nature of the system facilitates a solution to the problem of manual setup and breakdown. In addition, the modular jig system, according to the present disclosure, addresses the problem of configuration design present in known systems. In known systems someone with knowledge of fixturing has to figure out the best configuration and assembly process and then teach it to the workers doing the assembly. The system, according to the present disclosure, programmatically solved issues of the prior art by an integrated software and hardware solution.

In one embodiment, the jig system addresses the problem of fixing in place and guiding the work of industrial robots in the automated assembly of rebar cages for reinforced concrete applications in the construction industry. The modular jig system, according to the present disclosure, addresses the physical problem of holding the workpiece as it is being assembled by two collaborative industrial robots (e.g., a material handling robot and a connecting robot) and the process problem of automating the reconfiguration in setup for each job (for a wide range of possible shapes and sizes) with little or no human intervention.

In one embodiment, a modular jig system according to the present disclosure facilitates the assembly of rebar cages in a partially or fully automated process by industrial robots. The industrial robots are responsible for both jig setup and configuration as well as assembling the rebar cage workpiece thereby delivering an end to end flexible manufacturing process.

The modular jig system, according to the present disclosure, includes design for integration with industrial robots including during setup facilitates a partially or fully automated process with little or no need for manual setup or loading of the jig. The modular and reconfigurable design of the modular jig facilitates a wide range of cage shapes and sizes to be assembled using the same hardware. The modular jig system allows for fast setup and simple and inexpensive replacement of damaged or worn components thereby reducing downtime. The fixturing elements, such as the magnetic, hydraulically actuated, pneumatically actuated, or electrically actuated brackets, reduce mechanical points of failure and save time.

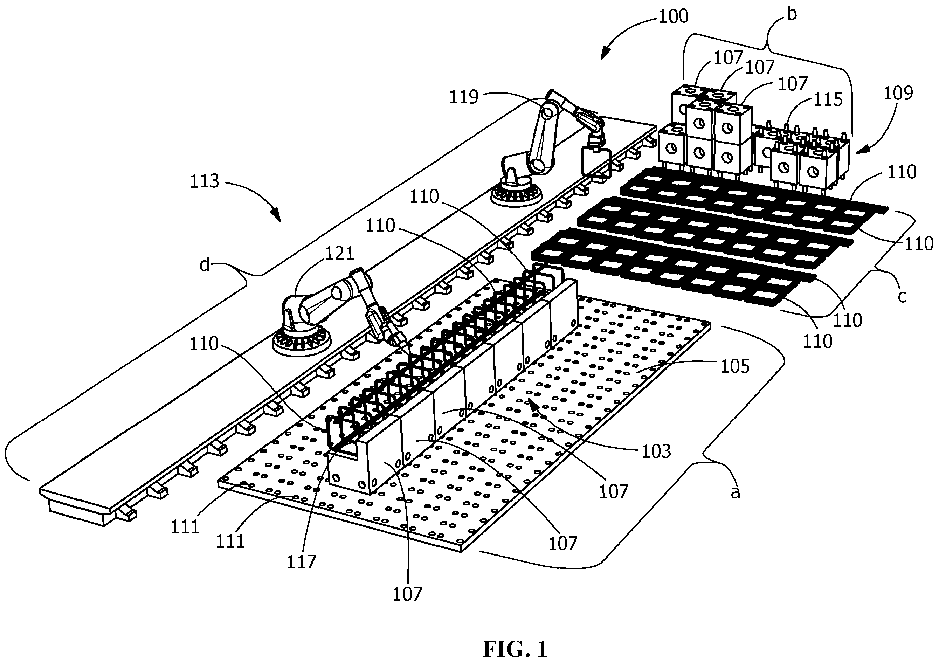

FIG. 1 shows a rebar cage assembly system 100, according to the present disclosure. The rebar cage assembly system 100 includes a modular jig 103 formed on a fixture base 105. The fixture base 105 includes a surface or structure onto which jig subcomponents may be detachably engaged. For example, the fixture base 105 may include fixture engagement features 111, such as mechanical features such as, but not limited to indentations, holes or slots, other features, such as, but not limited to, magnets, capable of detachably engaging jig subcomponents 107.

The modular jig 103 is made up of a plurality of jig subcomponents 107 provided by a robotic system 113 from a supply of jig subcomponents 107 in a staging area 109. The jig subcomponents 107 each include a jig attachment feature 115 and a rebar retention feature 117. The jig attachment feature 115 includes a feature that detachably engages the fixture engagement feature 111 of the fixture. In addition, jig attachment feature 115 may include a feature that detachably engages other jig subcomponents 107 to position the jig subcomponents 107 with respect to each other to a jig geometry for modular jig 103. The jig attachment features 115 that detachably engage the fixture base 105 may the same or different than the features that detachably engage the other jig subcomponents 107. The plurality of jig subcomponents 107 are customizably arrangeable on the fixture base 105 to form a modular jig 103 to cooperatively position rebar segments 110 in the rebar retention features 117. Suitable rebar retention features 117 include, but are not limited to, a magnet, hydraulic fastening slot, magnetic fastening slot, a pneumatically actuated slot or an electrically actuated slot. For example, the rebar retention feature 117 may be a structure having one or more magnets or magnetic fastening slots that are arranged to magnetically engage a rebar segment into a desired position. In addition, the rebar retention feature 117 may be an actuated slot made up of two or more surfaces that close and engage a rebar segment, once the rebar segment, such as a stirrup, has been placed between them, thus fixing the stirrup in place. The pneumatically actuated slot is actuated with compressed gas driving surfaces of the rebar retention feature 117 into engagement upon activation of an electronic or mechanical trigger. The hydraulically actuated slot is actuated with fluid that drives surfaces of the rebar retention feature 117 into engagement upon activation of an electronic or mechanical trigger. The plurality of jig subcomponents 107 are customizably arrangeable on the fixture base 105 to form the modular jig 103. The plurality of rebar segments 110 are detachably engaged to the modular jig 103 forming a geometry to be joined together into a rebar cage. The detachable engagement between the jig attachment feature 115 and the fixture engagement feature 111 allows disengagement for disassembly but provides sufficient engagement to position and retain the rebar segments 110 to permit joining of the rebar segments to form a rebar cage.

The rebar segments 110 are provided to the modular jig 103 from the staging area 109 by the robotic system 113. The robotic system 113 includes a first robot 119 and a second robot 121. The first robot 119 is arranged and disposed to independently retrieve and position jig subcomponents 107 and rebar segments 110. Suitable robotic systems for the first robot 119 include, but are not limited to, 6-axis industrial robots having an external axis or other material handling robots having a high degree of geometric freedom when placing material. Suitable robots for use as the first robot 119 include, for example, an ABB 6700 6-axis industrial robot (available from ABB Robotics). In other words, material can be placed essentially at any orientation within the robot's reach. In other embodiments, the first robot 119 may include external linear axes to extend the robot's reach. In one embodiment, the robotic arm has a payload of up to 235 kg and is capable of reaching up to 2.65 m from its base. The second robot 121 is arranged and disposed to join rebar segments 110 to form a rebar cage. Suitable robotic systems for the second robot 121 include, but are not limited to, 6-axis industrial robots configured with wire tying implements or welding implements or other metal joining robots. Second robot 121 may be the same or different than first robot 119, as described above. Second robot 121 may utilize any known implement for tying wire or welding metal to join the rebar segments. In one embodiment, the first robot 119 and second robot 121 are separate industrial robots. In another embodiment, the first robot 119 and second robot 121 are a single industrial robot, such as an industrial robot with an interchangeable head portion. In addition, the robotic system includes a sensor arrangement that provides, for example, optical or electronic verification of positioning of jig subcomponents 107 and rebar segments.

In an embodiment, robotic system 113, including the first robot 119, the second robot 121 and the sensor system, may include, among other things, one or more computing devices such as a processor (e.g., a microprocessor), a central processing unit (CPU), a digital signal processor (DSP), an application-specific integrated circuit (ASIC), a field programmable gate array (FPGA), and the like, or any combinations thereof, and can include discrete digital or analog circuit elements or electronics, or combinations thereof. In an embodiment, robotic system 113 includes one or more ASICs having a plurality of predefined logic components. In an embodiment, robotic system 113 includes one or more FPGAs, each having a plurality of programmable logic components.

In an embodiment, robotic system 113 may include one or more electric circuits, printed circuits, flexible circuits, electrical conductors, electrodes, cavity resonators, conducting traces, ceramic patterned electrodes, electro-mechanical components, transducers, and the like.

In an embodiment, robotic system 113 may include one or more components operably coupled (e.g., communicatively, electromagnetically, magnetically, ultrasonically, optically, inductively, electrically, capacitively coupled, wirelessly coupled, and the like) to each other. In an embodiment, circuitry includes one or more remotely located components. In an embodiment, remotely located components are operably coupled, for example, via wireless communication. In an embodiment, remotely located components are operably coupled, for example, via one or more communication modules, receivers, transmitters, transceivers, and the like.

In an embodiment, robotic system 113 includes memory that, for example, stores instructions or information. Non-limiting examples of memory include volatile memory (e.g., Random Access Memory (RAM), Dynamic Random Access Memory (DRAM), and the like), non-volatile memory (e.g., Read-Only Memory (ROM), Electrically Erasable Programmable Read-Only Memory (EEPROM), Compact Disc Read-Only Memory (CD-ROM), and the like), persistent memory, and the like. Further non-limiting examples of memory include Erasable Programmable Read-Only Memory (EPROM), flash memory, and the like. In an embodiment, memory is coupled to, for example, one or more computing devices by one or more instructions, information, or power buses.

In an embodiment, robotic system 113 includes a computer-readable media drive or memory slot that is configured to accept signal-bearing medium (e.g., computer-readable memory media, computer-readable recording media, and the like). In an embodiment, a program for causing a system to execute any of the disclosed methods can be stored on, for example, a computer-readable recording medium, a signal-bearing medium, and the like. Non-limiting examples of signal-bearing media include a recordable type medium, such as a magnetic tape, floppy disk, a hard disk drive, a Compact Disc (CD), a Digital Video Disk (DVD), Blu-Ray Disc, a digital tape, a computer memory, and the like, as well as transmission type medium, such as a digital or an analog communication medium (e.g., a fiber optic cable, a waveguide, a wired communications link, a wireless communication link (e.g., receiver, transmitter, transceiver, transmission logic, reception logic, etc.). Further non-limiting examples of signal-bearing media include, but are not limited to, DVD-ROM, DVD-RAM, DVD+RW, DVD-RW, DVD-R, DVD+R, CD-ROM, Super Audio CD, CD-R, CD+R, CD+RW, CD-RW, Video Compact Discs, Super Video Discs, flash memory, magnetic tape, magneto-optic disk, MINIDISC, non-volatile memory card, EEPROM, optical disk, optical storage, RAM, ROM, system memory, web server, and the like.

Also shown in FIG. 1, the rebar segments 110 in the staging area 109 are arranged to permit the first robot 119 to retrieve, move and position rebar segments 110. In one embodiment, the first robot operates independently. In another embodiment, the first robot 119 operates in conjunction with human interaction. For example, the first robot 119, when working independently, retrieves the rebar segments from a rack, conveyor system or a cart without human interaction. When first robot 119 is working collaboratively with a human, the first robot 119 retrieves the rebar segments from a designated station that the human may specify, identify or otherwise direct.

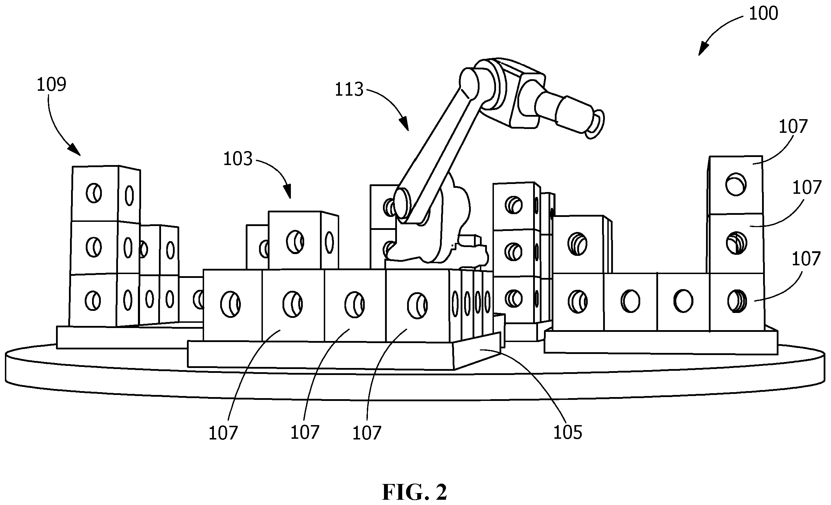

FIG. 2 shows an alternate arrangement of the rebar cage assembly system 100 according to another embodiment. FIG. 2 shows an arrangement wherein the jig subcomponents 107 are staged and positioned by first robot 119 onto fixture base 105. While not visible in FIG. 2, jig subcomponents 107 each include jig attachment features 115 to detachably engage the jig subcomponents 107 to either or both of the fixture base 105 and other jig subcomponents and rebar retention features 117 to detachably engage and position rebar segments 110. While FIG. 2 shows the jig subcomponents 107 as being cubic geometry, the invention is not so limited. Jig subcomponents 107 may have other geometries, including, but not limited to, rounded, rectangular, oval, or combinations of various geometries to form the desired jig geometry.

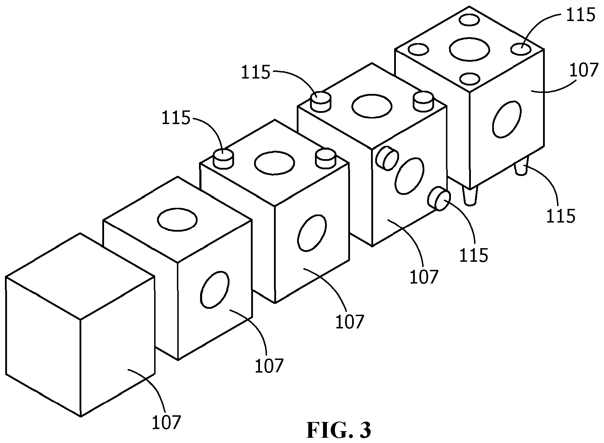

FIG. 3 shows a plurality of jig subcomponents 107 showing various configurations of jig engagement features 111. FIG. 3 shows the jig subcomponents 107 having jig engagement features 111. While not visible in FIG. 3, the jig subcomponents 107 further include rebar retention features 117 to detachably engage and position rebar segments 110. The embodiment shown in FIG. 3 shows various arrangements of jig engagement features 111 that are configured to detachably engage either or both of the fixture base 105 and other jig subcomponents 107 having varied locking features that permit, for example, building of larger structures and/or structures having varied and desired geometries.

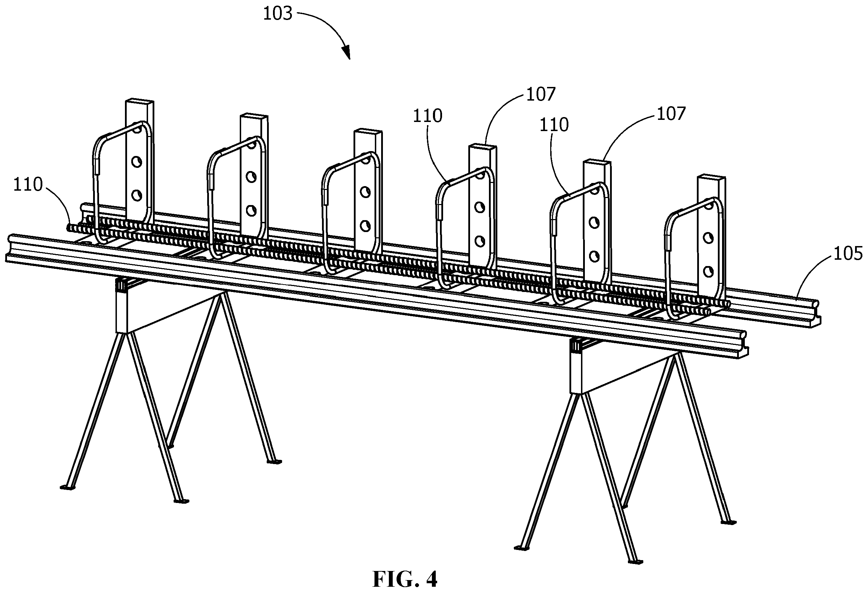

FIG. 4 shows an alternate arrangement of the modular jig 103, showing an alternate embodiment. As shown in FIG. 4, jig subcomponents 107 are provided on a fixture base 105. In this embodiment the fixture base 105 is a pair of rails that provide a support for the jig subcomponents 107 and allow for movement of the jig subcomponents with respect to one another to provide customized spacing of the rebar segments 110. The arrangement of fixture base 105 wherein the fixture base 105 is a set of rails also allows the ability to easily slide and fix the jig subcomponents 107. Custom designed rails allow use of fixture designs that are easy to detachably engage the jig subcomponents 107.

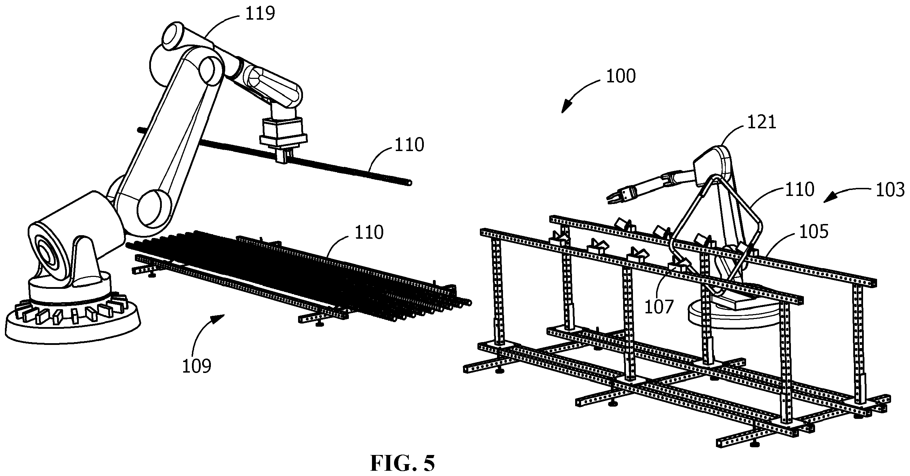

FIG. 5 shows an alternate arrangement of the rebar cage assembly system 100, according to another embodiment. The system 100 includes the first robot 119, second robot 121, modular jig 103, fixture base 105, jig subcomponents 107, rebar segments 110, and staging area 109 as shown and described with respect to FIG. 1. However, the fixture base 105 includes a pair of rails having openings to receive and engage jig engagement features 111 (not shown in FIG. 5) of jig subcomponent 107.

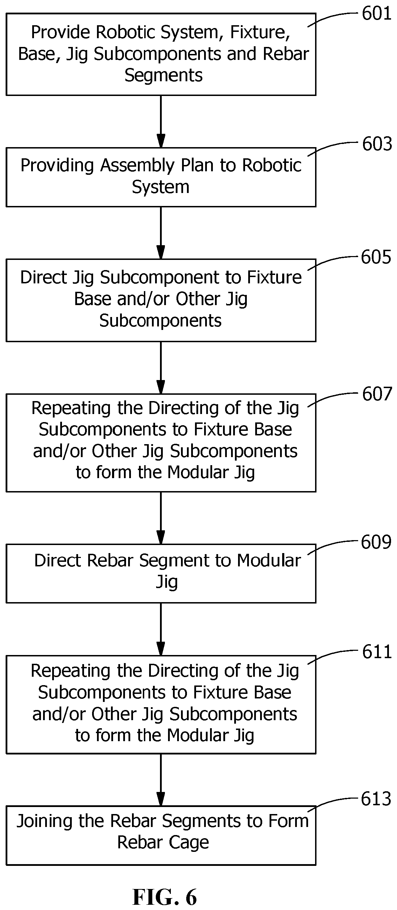

As shown in FIG. 6, the present disclosure includes a method for assembling a rebar cage. The method includes providing a robotic system having a first robot and second robot, a plurality of jig subcomponents and a plurality of rebar segments in a staging area (box 601). As discussed above, the first robot provides material handling of the jig subcomponents and the rebar segments and the second robot is a joining robot. The first robot is arranged and disposed to independently retrieve and position jig subcomponents and rebar segments on the fixture base and the second robot is arranged and disposed to join rebar segments to form the rebar cage. The jig subcomponents and rebar segments are provided in a manner that allows for the first robot to retrieve, move and position the jig subcomponents and rebar segments. As in the system described above, the jig subcomponents each include a jig attachment feature and a rebar retention feature. The rebar retention feature is configured to detachably receive the rebar segments. In addition, a fixture base is provided to provide a support and surface onto which the jig subcomponents may be assembled into the modular jig.

As shown in FIG. 6., the method includes providing an assembly plan for a configuration of the modular jig to the robotic system (box 603). A software application is used to generate an assembly plan including robotic motion planning for initial setup of the modular jig. The assembly plan may be inputted via any suitable method. For example, the assembly plan may be provided as a CAD file or similar design data file via a direct input for via transferred data. In addition, assembly plan can be programmed directly into the robotic system. The assembly plan provides specific instructions, including geometry, configuration, spacing or other assembly information, for the first robot and the second robot to arrange the modular jig and provide rebar segments, when joined by the second robot, form the desired rebar cage configuration. In one embodiment, the assembly planning software takes a CAD file as an input and then generates the points of support for the desired jig structure. The jig structure configuration is then derived from these structural points of support. After the assembly plan is provided to the robotic system, at least one of the jig subcomponents is directed to the fixture base with the first robot to detachably engage the jig subcomponent to the fixture base, to other jig subcomponents or both (box 605). In certain embodiments, the jig assembly plan is sent to the robot through wireless connection or via a serial connection. The directing of the jig subcomponents to the fixture base with the first robot is repeated until the jig subcomponents engaged to the fixture base, to other jig subcomponents or to both form the configuration of the modular jig (box 607). After the modular jig is formed, at least one of the rebar segments is directed to the modular jig with the first robot and the rebar segment is positioned to detachably engage the rebar retention feature of at least one jig subcomponent (box 609). The rebar segment to the modular jig are repeatedly directed with the first robot until the rebar segments are positioned in a configuration that, when joined, form a rebar cage (box 611). After the rebar segments are positioned, the rebar segments are joined together with the second robot to form a rebar cage.

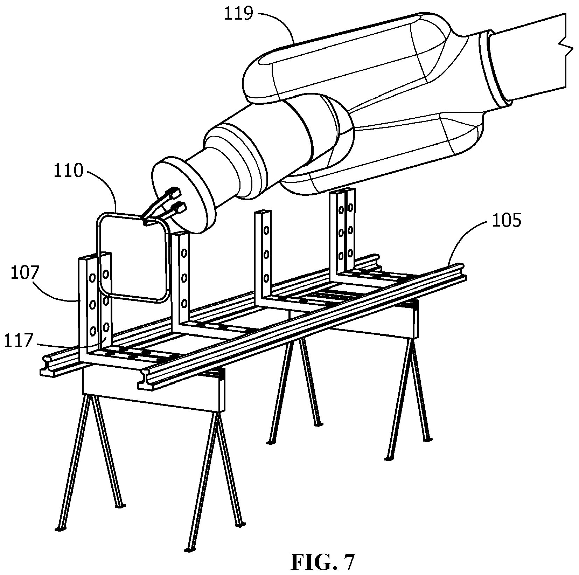

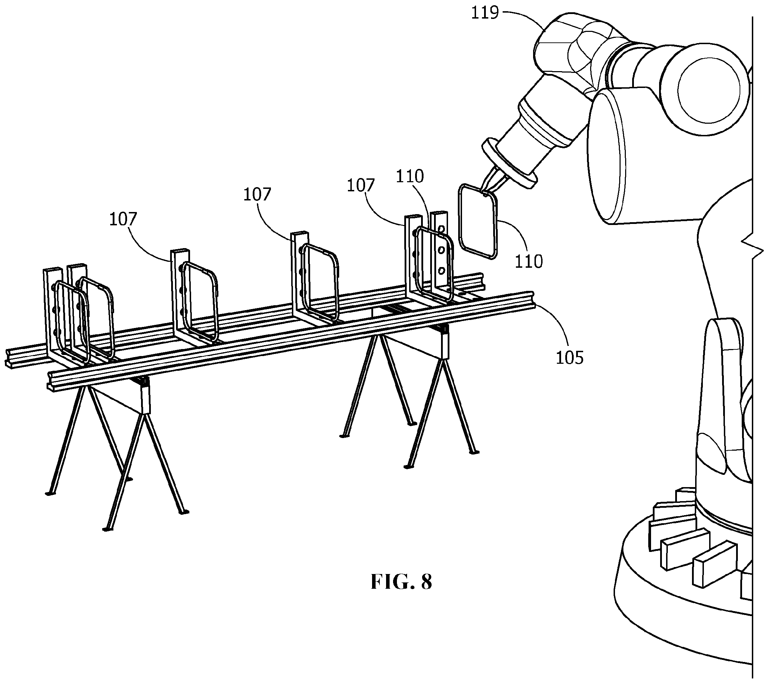

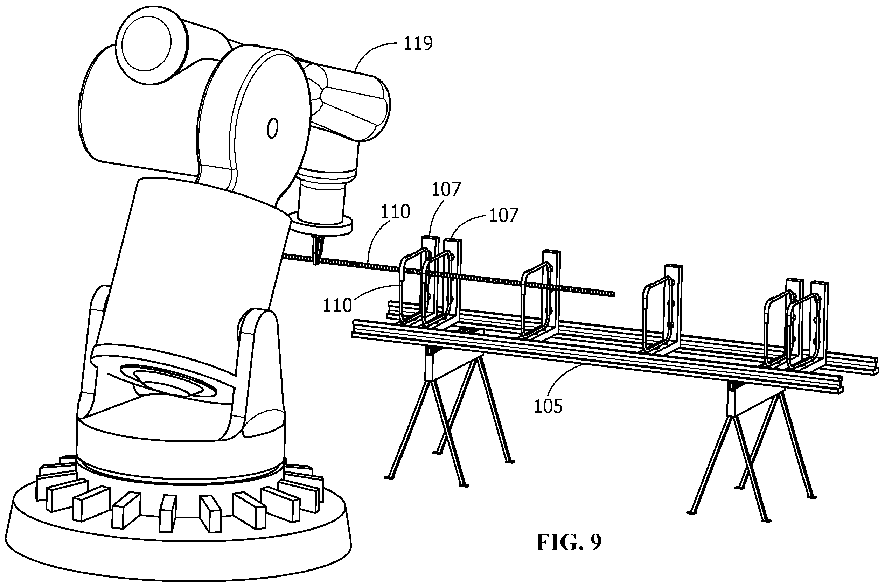

FIG. 7 shows a first robot 119 positioning a rebar segment 110 into the rebar retention feature 117 of jig subcomponent 107. FIG. 8 shows the system shown in FIG. 7, wherein a plurality of rebar segments 110 have been positioned into jig subcomponent 107. FIG. 9 shows the system shown in FIG. 7, wherein a plurality of rebar segments 110 have been positioned into jig subcomponent 107 and a rebar segment 110 having a linear geometry is being positioned into the jig subcomponent 107.

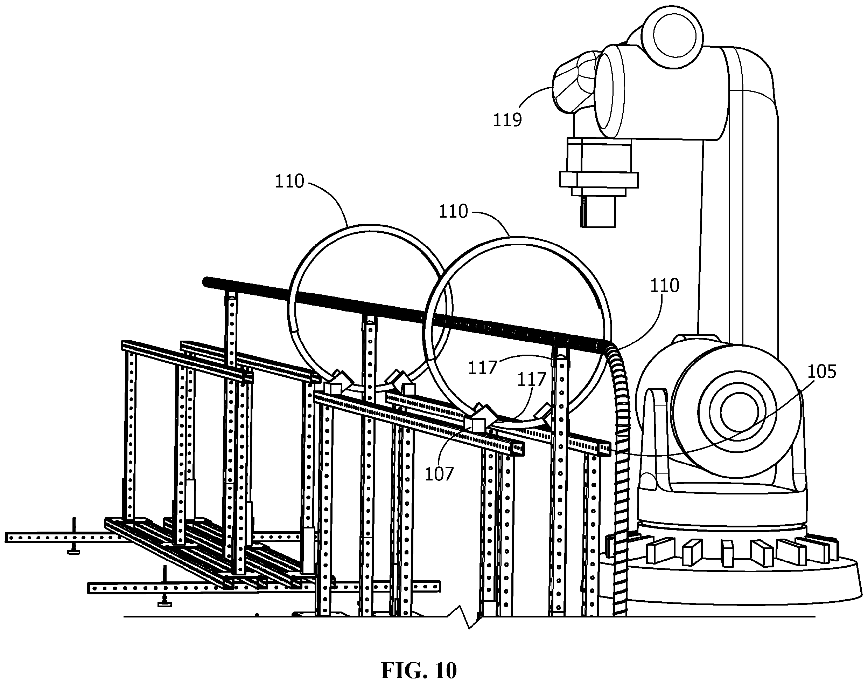

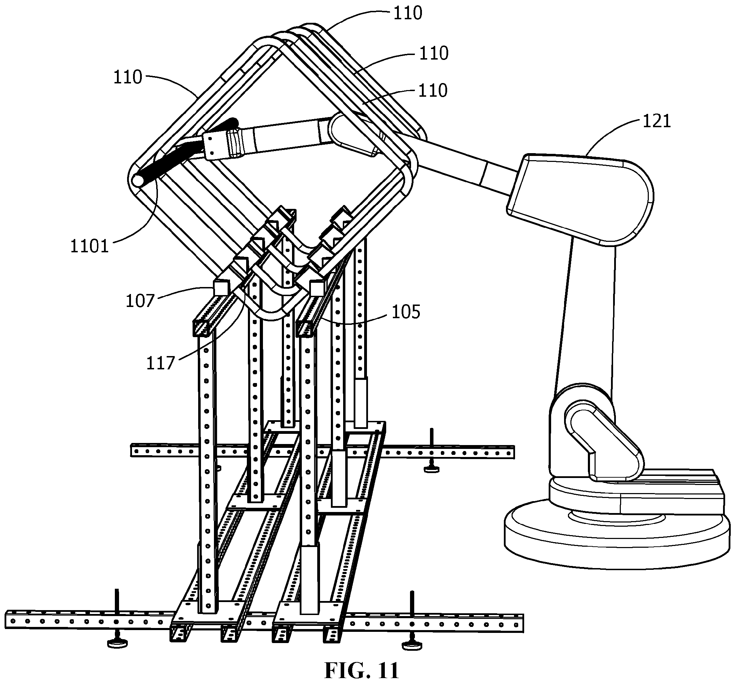

FIG. 10 shows an alternate arrangement of jig subcomponents 107 having rebar segments 110 arranged into a circular geometry with a rebar segment 110 passing orthogonally through the circular rebar segments 110. In addition, FIG. 11 shows rebar retention features 117 retaining both the circular rebar segments and the orthogonal long rebar segment 110.

FIG. 11 shows a second robot 121 joining rebar segments 110 that are held in position in jig subcomponent 107 by rebar retention feature 117. Second robot 121 joins the rebar segments 110 by a wire 1101. Robot 121 manipulates wire 1101 about adjacent or near adjacent rebar segments 110 and encircles the rebar segments 110 a plurality of times. In one embodiment, second robot 121 carries an end of arm tool including a gear and a motor mechanism which can throw or otherwise direct a loop around the rebar segment 110 intersection any suitable number of times before twisting the wire to create a tense and taut tie with wire 1101. This mechanism is also controlled by the second robot's 121 signals. In other embodiments, second robot 121 includes an end of arm tool including a welding head that is capable of welding rebar segment 110 intersections to join the rebar segments 110 into a rebar cage.

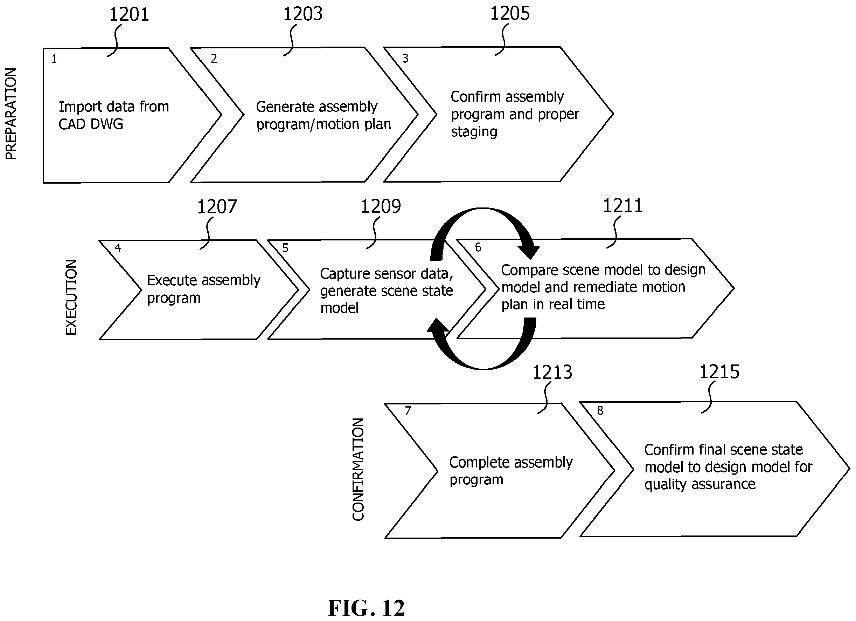

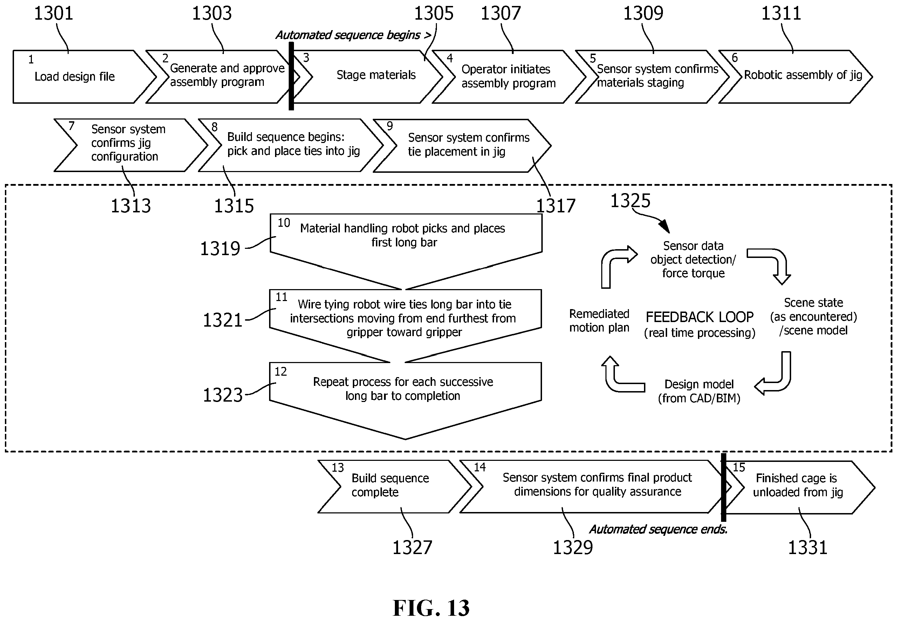

FIG. 12 and FIG. 13 outline exemplary process workflows for the hardware and the software components. FIG. 12 shows a process flow including three phases, including preparation, execution and confirmation for forming the modular jig 103. As shown in FIG. 12, data from the CAD DWG is imported (box 1201). An assembly program and/or motion plan are generated (box 1203). The assembly program and proper staging are confirmed (box 1205). After the assembly program and proper staging are confirmed, the process moves to the execution phase, where the assembly program is executed (box 1207). The sensor data is captured and the scene state model is generated (box 1209). The scene model is compared to the design model and the motion plan is remediated in real time (box 1211). The steps of boxes 1209 and 1211 are repeated until the design is formed. Upon the formation of the design, the process moves into the confirmation phase, wherein the assembly program is completed (box 1213). The process confirms the final scene state model to the design model for quality assurance (box 1215).

FIG. 13 shows an overall process flow of the robot formation of the modular jig 103 and the rebar cage from rebar segments 110. The design file, including the assembly program, is loaded into the robotic system 113 (box 1301). The assembly program is generated and approved (box 1303). Materials, including rebar segments 110 and jig subcomponents 107, are staged (box 1305). An operator initiates the assembly program (box 1307). The method continues where a sensor system, such as an optical or electronic verification system, confirms the staging of the materials (box 1309). The modular jig 103 is assembled by the first robot 119 (box 1311). The sensor system confirms the modular jig 103 formed from the assembled jig subcomponents 107 (box 1313). The method continues with the picking and placing of the rebar segments 110 (e.g., ties) where the first robot 119 retrieves and positions the rebar segments 110. The sensor system confirms the positioning of the tie rebar segments 110 (box 1317). The first robot 119 (e.g., the materials handling robot) retrieves and positions a first long bar rebar segment 110 (box 1319). The second robot 121 (e.g., the wire tying robot) ties the long bar rebar segment 110 into the tie rebar segments 110 at intersection moving from end furthest from gripper toward gripper (box 1321). The process is repeated for each long bar rebar segment 110 (box 1323). The process utilizes a feedback loop that utilizes sensor data that compares to a scene state/scene model as encountered, which is compared to a design model, wherein a remediated motion plan is provided to instruct the first robot 119 and second robot 121 (box 1325). Once the loops are completed, the build sequence is completed (box 1327). The sensor system confirms the final product dimension for quality assurance (box 1329). Finally, the finished rebar cage is unloaded from the modular jig 103 (box 1331).

While the invention has been described with reference to one or more embodiments, it will be understood by those skilled in the art that various changes may be made without departing from the scope of the invention as defined in the appended claims. In addition, many modifications may be made to adapt a particular situation or material to the teachings of the invention without departing from the scope of the appended claims. Therefore, it is intended that the invention not be limited to the particular embodiment disclosed as the best mode contemplated for carrying out this invention, but that the invention will include all embodiments falling within the scope of the appended claims. In addition, all numerical values identified in the detailed description shall be interpreted as though the precise and approximate values are both expressly identified.

## Claims

1. A rebar cage assembly system comprising:
a modular jig (103) for forming a rebar cage comprising:
a plurality of jig subcomponents (107), the jig subcomponents (107) each comprising a jig attachment feature (115) and a rebar retention feature (117), the rebar retention feature being configured to detachably receive rebar segments (110);
a fixture base (105) on which the plurality of jig subcomponents (107) are customizably arrangeable to form a modular jig (103) to cooperatively position rebar segments (110) in the
rebar retention features (117);
**characterised by**:
a robotic system having a first robot (119) and a second robot (121),
wherein the first robot (119) is arranged and disposed to independently retrieve and
position jig subcomponents (107) and rebar segments (110) and the second robot (121) is arranged
and disposed to join rebar segments (110) to form a rebar cage.

2. The system of claim 1 wherein the rebar retention feature (117) is a magnetic fastening slot

3. The system of claim 1 wherein the rebar retention feature (117) is a pneumatically actuated
slot.

4. The system of claim 1 wherein the rebar retention feature (117) is an electrically actuated slot

5. The system of claim 1, wherein the first robot (119) and second robot (121) are separate industrial
robots.

6. The system of claim 1, wherein the first robot (119) and second robot (121) are a single industrial
robot with an interchangeable head portion.

7. A method for assembling a rebar cage, comprising:
providing a robotic system having a first robot (119) and second robot (121);
a plurality of jig subcomponents (107) and a plurality of rebar segments (110) in a staging area (109), the jig subcomponents (107) each comprising a jig attachment feature (115) and a rebar retention feature (117), the rebar retention feature being configured to detachably receive rebar
segments;
and a fixture base (105), the first robot (119) being arranged and disposed to independently retrieve and position jig subcomponents (107) and rebar segments (110) on the fixture base (105) and the second robot (121) is arranged and disposed to join rebar segment: (110) to form the rebar cage;
providing an assembly plan for a configuration of the modular jig to the robotic system;
directing at least one of the jig subcomponents (107) to the fixture base (105) with the first robot (119) to detachably engage the jig subcomponent to the fixture base, to other jig subcomponents or both;
repeatedly directing the jig subcomponents (107) to the fixture base (105) with the first robot (119) until the jig subcomponents engaged to the fixture base, to other jig subcomponents or to both form the configuration of the modular jig;
directing at least one of the rebar segments (110) to the modular jig (103) with the first robot (119) and positioning the rebar segment to detachably engage the rebar retention feature (117) of at least one jig subcomponent;
repeatedly directing a rebar segment (110) to the modular jig (103) with the first robot (119) until the rebar segments are positioned in a configuration that, when joined, form a rebar cage; and
connecting the rebar segments (110) together with the second robot (121) to form a rebar cage.

8. The method of claim 7, wherein the rebar segments (110) are arranged on a rack, conveyor system or cart that is oriented to permit the first robot to retrieve the rebar segment.

9. The method of claim 7, wherein the providing an assembly plan for a configuration of the modular jig to the robotic system includes transferring computer aided drafting (CAD) data to the robotic system, the CAD data including instructions for the configuration of the modular jig.

10. The method of claim 7, wherein the directing the at least one of the jig subcomponents (107) to the fixture base (105) includes mechanically engaging together the jig subcomponents with the jig attachment feature (115) to the fixture base, to other jig subcomponents or to both to form the configuration of the modular jig, according to the assembly plan.

11. The method of claim 10, wherein the mechanically engaging includes setting the spacing of the jig subcomponent.

12. The method of claim 7, wherein the directing the at least one of the jig subcomponents (107) to the fixture base (105) includes magnetically engaging together the jig subcomponents with the jig attachment feature (115) to the fixture base, to other jig subcomponents or to both to form the configuration of the modular jig, according to the assembly plan.

13. The method of claim 12, wherein the magnetically engaging includes setting the spacing of the jig subcomponent, according to the assembly plan.

14. The method of claim 7, connecting the rebar segments (110) together with the second robot (121) includes directing the second robot to connect junctions of the rebar segments with wire ties

15. The method of claim 7, connecting the rebar segments (110) together with the second robot (121) includes directing the second robot to weld junctions of the rebar segments.

16. The method of claim 7, further comprising removing the rebar cage from the modular jig (103) with the first robot (119).

17. The method of claim 7, further comprising independently removing each jig subcomponent (107) from the fixture base (105) to disassemble the modular jig (103) and returning the jig subcomponents to the staging area (109).

## Patentansprüche

1. System zur Montage eines Bewehrungskorbs, das Folgendes umfasst:
eine modulare Montagevorrichtung (103) zur Bildung eines Bewehrungskorbs, die Folgendes umfasst:
mehrere Montagevorrichtungsteilkomponenten (107), wobei die Montagevorrichtungsteilkomponenten (107) jeweils ein Montagevorrichtungsbefestigungsmerkmal (115) und ein Bewehrungsstabrückhaltemerkmal (117) umfassen, wobei das Bewehrungsstabrückhaltemerkmal zur lösbaren Aufnahme von Bewehrungsstababschnitten (110) ausgebildet ist,
eine Halterungsgrundplatte (105), auf der die mehreren Montagevorrichtungsteilkomponenten (107) kundenspezifisch anpassbar so angeordnet werden können, dass sie eine modulare Montagevorrichtung (103) bilden, um Bewehrungsstababschnitte (110) zusammenwirkend in den Bewehrungsstabrückhaltemerkmalen (117) zu positionieren, **gekennzeichnet durch**:
ein Robotersystem mit einem ersten Roboter (119) und einem zweiten Roboter (121),
wobei der erste Roboter (119) so eingerichtet und angeordnet ist, dass er Montagevorrichtungsteilkomponenten (107) und Bewehrungsstababschnitte (110) eigenständig aufnimmt und positioniert, und der zweite Roboter (121) so eingerichtet und angeordnet ist, dass er Bewehrungsstababschnitte (110) zur Bildung eines Bewehrungskorbs zusammenfügt.

2. System nach Anspruch 1, bei dem das Bewehrungsstabrückhaltemerkmal (117) ein Magnetbefestigungsschlitz ist.

3. System nach Anspruch 1, bei dem das Bewehrungsstabrückhaltemerkmal (117) ein pneumatisch betätigter Schlitz ist.

4. System nach Anspruch 1, bei dem das Bewehrungsstabrückhaltemerkmal (117) ein elektrisch betätigter Schlitz ist.

5. System nach Anspruch 1, bei dem der erste Roboter (119) und der zweite Roboter (121) separate Industrieroboter sind.

6. System nach Anspruch 1, bei dem der erste Roboter (119) und der zweite Roboter (121) ein einziger Industrieroboter mit einem gegeneinander austauschbaren Kopfabschnitt sind.

7. Verfahren zur Montage eines Bewehrungskorbs, das Folgendes umfasst:
Bereitstellen eines Robotersystems mit einem ersten Roboter (119) und einem zweiten Roboter (121), mehrerer Montagevorrichtungsteilkomponenten (107) und mehrerer Bewehrungsstababschnitte (110) in einem Bereitstellungsbereich (109), wobei die Montagevorrichtungsteilkomponenten (107) jeweils ein Montagevorrichtungsbefestigungsmerkmal (115) und ein Bewehrungsstabrückhaltemerkmal (117) umfassen, wobei das Bewehrungsstabrückhaltemerkmal zur lösbaren Aufnahme von Bewehrungsstababschnitten ausgebildet ist, und einer Halterungsgrundplatte (105), wobei der erste Roboter (119) so eingerichtet und angeordnet ist, dass er Montagevorrichtungsteilkomponenten (107) und Bewehrungsstababschnitte (110) auf der Halterungsgrundplatte (105) eigenständig aufnimmt und positioniert, und der zweite Roboter (121) so eingerichtet und angeordnet ist, dass er Bewehrungsstababschnitte (110) zur Bildung des Bewehrungskorbs aneinanderfügt,
Bereitstellen eines Montageplans für einen Aufbau der modularen Montagevorrichtung für das Robotersystem,
Leiten wenigstens einer der Montagevorrichtungsteilkomponenten (107) zur Halterungsgrundplatte (105) mit dem ersten Roboter (119), um die Montagevorrichtungsteilkomponente lösbar mit der Halterungsgrundplatte, mit anderen Montagevorrichtungsteilkomponenten oder mit beiden in Eingriff zu bringen,
wiederholtes Leiten der Montagevorrichtungsteilkomponenten (107) zur Halterungsgrundplatte (105) mit dem ersten Roboter (119), bis die Montagevorrichtungsteilkomponenten, die mit der Halterungsgrundplatte, mit anderen Montagevorrichtungsteilkomponenten oder mit beiden in Eingriff sind, die Gestaltung der modularen Montagevorrichtung bilden,
Leiten wenigstens eines der Bewehrungsstababschnitte (110) zur modularen Montagevorrichtung (103) mit dem ersten Roboter (119) und Positionieren des Bewehrungsstababschnitts derart, dass er lösbar mit dem Bewehrungsstabrückhaltemerkmal (117) wenigstens einer Montagevorrichtungsteilkomponente in Eingriff gelangt,
wiederholtes Leiten eines Bewehrungsstababschnitts (110) zur modularen Montagevorrichtung (103) mit dem ersten Roboter (119), bis die Bewehrungsstababschnitte so in einer Anordnung positioniert sind, dass sie, wenn sie zusammengefügt sind, einen Bewehrungskorb bilden, und
Verbinden der Bewehrungsstababschnitte (110) miteinander mit dem zweiten Roboter (121) zur Bildung eines Bewehrungskorbes.

8. Verfahren nach Anspruch 7, wobei die Bewehrungsstababschnitte (110) auf einem Gestell, einer Förderanlage oder einem Wagen angeordnet sind, der bzw. die so ausgerichtet ist, dass der erste Roboter den Bewehrungsstababschnitt auf- bzw. entnehmen kann.

9. Verfahren nach Anspruch 7, wobei beim Bereitstellen eines Montageplans für einen Aufbau der modularen Montagevorrichtung für das Robotersystem CAD-Daten (Daten aus computergestütztem Zeichnen, engl. Computer Aided Drafting) an das Robotersystem übertragen werden, wobei die CAD-Daten Anweisungen für den Aufbau der modularen Montagevorrichtung enthalten.

10. Verfahren nach Anspruch 7, wobei beim Leiten der wenigstens einen der Montagevorrichtungsteilkomponenten (107) zur Halterungsgrundplatte (105) die Montagevorrichtungsteilkomponenten mit dem Montagevorrichtungsbefestigungsmerkmal (115) mechanisch mit der Halterungsgrundplatte, mit anderen Montagevorrichtungsteilkomponenten oder mit beidem in Eingriff gebracht werden, zur Ausbildung der Gestaltung der modularen Montagevorrichtung entsprechend dem Montageplan.

11. Verfahren nach Anspruch 10, wobei bei dem mechanischen In-Eingriff-Bringen der Abstand der Montagevorrichtungsteilkomponente eingestellt wird.

12. Verfahren nach Anspruch 7, wobei beim Leiten der wenigstens einen der Montagevorrichtungsteilkomponenten (107) zur Halterungsgrundplatte (105) die Montagevorrichtungsteilkomponenten mit dem Montagevorrichtungsbefestigungsmerkmal (115) magnetisch mit der Halterungsgrundplatte, mit anderen Montagevorrichtungsteilkomponenten oder mit beidem in Eingriff gebracht werden, zur Ausbildung der Gestaltung der modularen Montagevorrichtung entsprechend dem Montageplan.

13. Verfahren nach Anspruch 12, wobei bei dem magnetischen In-Eingriff-Bringen der Abstand der Montagevorrichtungsteilkomponente entsprechend dem Montageplan eingestellt wird.

14. Verfahren nach Anspruch 7, wobei beim Verbinden der Bewehrungsstababschnitte (110) miteinander mit dem zweiten Roboter (121) der zweite Roboter angewiesen wird, Verbindungsstellen der Bewehrungsstababschnitte mit Kabelbindern zu verbinden.

15. Verfahren nach Anspruch 7, wobei beim Verbinden der Bewehrungsstababschnitte (110) miteinander mit dem zweiten Roboter (121) der zweite Roboter angewiesen wird, Verbindungsstellen der Bewehrungsstababschnitte zu verschweißen.

16. Verfahren nach Anspruch 7, bei dem ferner der Bewehrungskorb von der modularen Montagevorrichtung (103) mit dem ersten Roboter (119) entfernt wird.

17. Verfahren nach Anspruch 7, bei dem ferner jede Montagevorrichtungsteilkomponente (107) eigenständig von der Halterungsgrundplatte (105) entfernt wird, um die modulare Montagevorrichtung (103) zu demontieren, und die Montagevorrichtungsteilkomponenten in den Bereitstellungsbereich (109) zurückgeführt werden.

## Revendications

1. Système d'assemblage de cage d'armature, comprenant :
un gabarit modulaire (103) pour la réalisation d'une cage d'armature, comprenant :
une pluralité de sous-composants de gabarit (107), les sous-composants de gabarit (107) comprenant chacun un élément d'attache de gabarit (115) et un élément de retenue d'armature (117), l'élément de retenue d'armature étant réalisé de manière à recevoir des segments d'armature (110) de manière détachable ;
une base de fixation (105) sur laquelle la pluralité de sous-composants de gabarit (107) sont aptes à être agencés de manière adaptée à l'usager pour former un gabarit modulaire (103) afin de positionner par coopération des segments d'armature (110) dans les éléments de retenue d'armature (117) ; **caractérisé par** :
un système robotique présentant un premier robot (119) et un deuxième robot (121),
le premier robot (119) étant aménagé et agencé de manière à indépendamment extraire et positionner des sous-composants de gabarit (107) et des segments d'armature (110), et le deuxième robot (121) étant aménagé et agencé de manière à joindre des segments d'armature (110) pour former une cage d'armature.

2. Système selon la revendication 1, l'élément de retenue d'armature (117) étant une fente de fixation magnétique.

3. Système selon la revendication 1, l'élément de retenue d'armature (117) étant une fente actionnée de manière pneumatique.

4. Système selon la revendication 1, l'élément de retenue d'armature (117) étant une fente actionnée de manière électrique.

5. Système selon la revendication 1, le premier robot (119) et le deuxième robot (121) étant des robots industriels séparés.

6. Système selon la revendication 1, le premier robot (119) et le deuxième robot (121) étant un seul robot industriel présentant un tronçon de tête interchangeable.

7. Procédé d'assemblage d'une cage d'armature, comprenant :
prévoir un système robotique présentant un premier robot (119) et un deuxième robot (121) ; une pluralité de sous-composants de gabarit (107), et une pluralité de segments d'armature (110) dans une zone de mise à disposition (109), les sous-composants de gabarit (107) comprenant chacun un élément d'attache de gabarit (115) et un élément de retenue d'armature (117), l'élément de retenue d'armature étant réalisé de manière à recevoir des segments d'armature de manière détachable ; et une base de fixation (105), le premier robot (119) étant aménagé et agencé de manière à indépendamment extraire et positionner des sous-composants de gabarit (107) et des segments d'armature (110) sur la base de fixation (105), et le deuxième robot (121) étant aménagé et agencé de manière à joindre des segments d'armature (110) pour former la cage d'armature ;
fournir un plan d'assemblage pour une configuration du gabarit modulaire au système robotique ;
conduire au moins l'un des sous-composants de gabarit (107) vers la base de fixation (105) au moyen du premier robot (119) pour l'enclenchement détachable du sous-composant de gabarit sur la base de fixation, d'autres sous-composants de gabarit ou les deux ;
conduire les sous-composants de gabarit (107) de manière répétée vers la base de fixation (105) au moyen du premier robot (119) jusqu'à ce que les sous-composants de gabarit enclenchés sur la base de fixation, d'autres sous-composants de gabarit ou les deux forment la configuration du gabarit modulaire ;
conduire au moins l'un des segments d'armature (110) vers le gabarit modulaire (103) au moyen du premier robot (119) et positionner le segment d'armature pour l'enclenchement détachable de l'élément de retenue d'armature (117) d'au moins un sous-composant de gabarit ;
conduire le segment d'armature (110) de manière répétée vers le gabarit modulaire (103) au moyen du premier robot (119) jusqu'à ce que les segments d'armature sont positionnés dans une configuration qui, à l'état joint, forme une cage d'armature ; et
relier les segments d'armature (110) les uns aux autres au moyen du deuxième robot (121) pour former une cage d'armature.

8. Procédé selon la revendication 7, les segments d'armature (110) étant agencés sur une étagère, un système d'acheminement ou un chariot orienté de manière à permettre au premier robot d'extraire le segment d'armature.

9. Procédé selon la revendication 7, la fourniture d'un plan d'assemblage pour une configuration du gabarit modulaire au système robotique comprenant le transfert de données de conception assistée par ordinateur (CAD) au système robotique, les données CAD comprenant des instructions pour la configuration du gabarit modulaire.

10. Procédé selon la revendication 7, la conduite dudit au moins un des sous-composants de gabarit (107) vers la base de fixation (105) comprenant l'enclenchement mécanique des sous-composants de gabarit ensemble avec l'élément d'attache de gabarit (115) sur la base de fixation, d'autres sous-composants de gabarit ou les deux pour former la configuration du gabarit modulaire selon le plan d'assemblage.

11. Procédé selon la revendication 10, l'enclenchement mécanique comprenant l'ajustage de l'écartement du sous-composant de gabarit.

12. Procédé selon la revendication 7, la conduite dudit au moins un des sous-composants de gabarit (107) vers la base de fixation (105) comprenant l'enclenchement magnétique des sous-composants de gabarit ensemble avec l'élément d'attache de gabarit (115) sur la base de fixation, d'autres sous-composants de gabarit ou les deux pour former la configuration du gabarit modulaire selon le plan d'assemblage.

13. Procédé selon la revendication 12, l'enclenchement magnétique comprenant l'ajustage de l'écartement du sous-composant de gabarit selon le plan d'assemblage.

14. Procédé selon la revendication 7, le raccordement des segments d'armature (110) les uns aux autres au moyen du deuxième robot (121) comprenant la conduite du deuxième robot de manière à relier des raccords des segments d'armature par des liaisons par fil.

15. Procédé selon la revendication 7, le raccordement des segments d'armature (110) les uns aux autres au moyen du deuxième robot (121) comprenant la conduite du deuxième robot de manière à souder des raccords des segments d'armature.

16. Procédé selon la revendication 7, comprenant en outre le retrait de la cage d'armature du gabarit modulaire (103) au moyen du premier robot (119).

17. Procédé selon la revendication 7, comprenant en outre le retrait indépendant de chaque sous-composant de gabarit (107) de la base de fixation (105) pour démonter le gabarit modulaire (103) et reconduire les sous-composants de gabarit vers la zone de mise à disposition (109).
